# EUROPÄISCHE PATENTANMELDUNG

(11) **EP 1 365 170 A1**
(43) Veröffentlichungstag der Anmeldung: **26.11.2003**
(21) Anmeldenummer: 03009380.1
(22) Anmeldetag: 25.04.2003
(51) Int. Cl.: F16F 15/18

(54) **Verfahren zur Bedämpfung von Drehmomentschwankungen im Antriebsstrang eines Kraftfahrzeugs**

(30) Priorität: 25.05.2002 DE 10223426
(71) Anmelder: Bayerische Motoren Werke Aktiengesellschaft, 80809 München (DE)
(72) Erfinder: Doepke, Hubertus, 82279 Eching (DE)

(57) **Zusammenfassung**

Die Erfindung betrifft ein Verfahren zur Bedämpfung von verbrennungsmotorisch verursachten Drehmomentschwankungen im Antriebsstrang eines Kraftfahrzeugs, das einen mit dem Verbrennungsmotor gekuppelten Generator aufweist. Es ist vorgesehen, dass das von dem Generator verursachte Gegendrehmoment in Abhängigkeit von der Drehzahl des Motors gesteuert wird derart, dass es mit der Frequenz der Drehmomentschwankungen im Antriebsstrang variiert, wobei die Schwankungen des Drehmoments im Antriebsstrang und des Gegendrehmoments des Generators phasengleich sind, oder die Phasenlage des Gegenmoments entsprechend spezifischer Anforderungen gesteuert oder geregelt werden kann.

## Beschreibung

Die Erfindung betrifft ein Verfahren zur Bedämpfung von verbrennungsmotorisch verursachten Drehmomentschwankungen im Antriebsstrang eines Kraftfahrzeugs, das einen mit dem Verbrennungsmotor gekuppelten Generator aufweist.

Bei Kraftfahrzeugen, die von einem Verbrennungsmotor angetrieben werden, kommt es im Antriebsstrang zwischen dem Motor und den Achswellen zu Drehmomentschwankungen. Diese Drehmomentschwankungen haben akustische Auswirkungen, wie z. B. Brummigkeiten zur Folge. Die Ursache für diese Drehmomentschwankungen besteht darin, dass ein Verbrennungsmotor taktweise arbeitet. Die Frequenz der Drehmomentschwankungen hängt daher einerseits von der Drehzahl und andererseits von der Anzahl der Zylinder des Motors ab. Durch die im Schwungrad des Verbrennungsmotors gespeicherte Rotationsenergie können die Drehmomentschwankungen im Antriebsstrang zwar in einem gewissen Maß bedämpft werden, dies gelingt aber nur unvollständig. Da die Frequenz der Drehmomentschwankungen der Frequenz der Verbrennungsvorgänge in dem Motor entspricht, tritt die Drehungleichförmigkeit im Antriebsstrang bei geringer Motordrehzahl besonders deutlich in Erscheinung.

Zur Stromversorgung der elektrischen Verbraucher eines Kraftfahrzeugs ist ein Generator vorgesehen. Der Generator wird üblicherweise so betrieben, dass er eine konstante Leistung erbringt. Das bedeutet, dass das zum Antreiben des Generators erforderliche Drehmoment ebenfalls konstant ist. Da der Generator mit dem Verbrennungsmotor gekuppelt ist, wirkt das für seinen Antrieb erforderliche Drehmoment dem vom Verbrennungsmotor erzeugten Drehmoment entgegen. Dadurch wird zwar die absolute Größe des im Antriebsstrang herrschenden Drehmoments verringert, die Amplitude der Drehmomentschwankungen wird durch das konstante Gegendrehmoment des Generators aber nicht beeinflußt.

Der Erfindung liegt die Aufgabe zugrunde, ein Verfahren zur Bedämpfung der verbrennungsmotorisch verursachten Drehmomentschwankungen im Antriebsstrang zu schaffen.

Erfindungsgemäß wird diese Aufgabe dadurch gelöst, dass das von dem Generator verursachte Gegendrehmoment in Abhängigkeit von der Drehzahl des Motors gesteuert wird derart, dass es mit der Frequenz der Drehmomentschwankungen im Antriebsstrang variiert, wobei die Schwankungen des Drehmoments im Antriebsstrang und des Gegendrehmoments des Generators phasengleich sind oder die Phase entsprechend besonderer Anforderungen gesteuert oder geregelt werden kann. Durch diese Modulation der Leistung des Generators und damit des zu seinem Antrieb erforderlichen Drehmoments sind die Schwankungen des von dem Generator auf den Antriebsstrang ausgeübten Gegendrehmoments zu den verbrennungsmotorisch verursachten Drehmomentschwankungen phasengleich, aber entgegengesetzt wirksam. Dies hat die vorteilhafte Folge, dass die Amplitude der Drehmomentschwankungen im Antriebsstrang verringert wird.

Das von dem Generator erzeugte Gegendrehmoment wird vorzugsweise periodisch auf Null verringert, damit nur die Spitzen der Drehmomentschwankungen im Antriebsstrang abgebaut werden.

Da es vorwiegend im Arbeitsbetrieb des Verbrennungsmotors zu störenden Drehungleichförmigkeiten im Antriebsstrang kommt, bzw im Schubbetrieb des Verbrennungsmotors die Drehungleichförmigkeit im Antriebsstrang so gering ist, dass eine Bedämpfung durch eine Modulation des vom Generator ausgeübten Gegendrehmoments nicht erforderlich ist, ist weiterhin vorgesehen, dass das Gegendrehmoment des Generators im Schubbetrieb des Verbrennungsmotors nicht moduliert wird und auf konstantem Nennwert gehalten werden kann.

Die Erfindung wird im folgenden anhand eines in der Zeichnung dargestellten Ausführungsbeispiels näher erläutert. Es zeigt:
Fig. 1 eine schematische Darstellung der Antriebseinheit eines Kraftfahrzeugs, umfassend einen Verbrennungsmotor und einen Generator,
Fig. 2 eine graphische Darstellung, die den zeitlichen Verlauf des von dem Verbrennungsmotor erzeugten Drehmoments und des von dem Generator ausgeübten Gegenmoments veranschaulicht, und
Fig. 3 eine graphische Darstellung ähnlich wie Fig. 2, die eine Erweiterung der Steuerungsmöglichkeiten des von dem Generator ausgeübten Gegenmoments veranschaulicht.

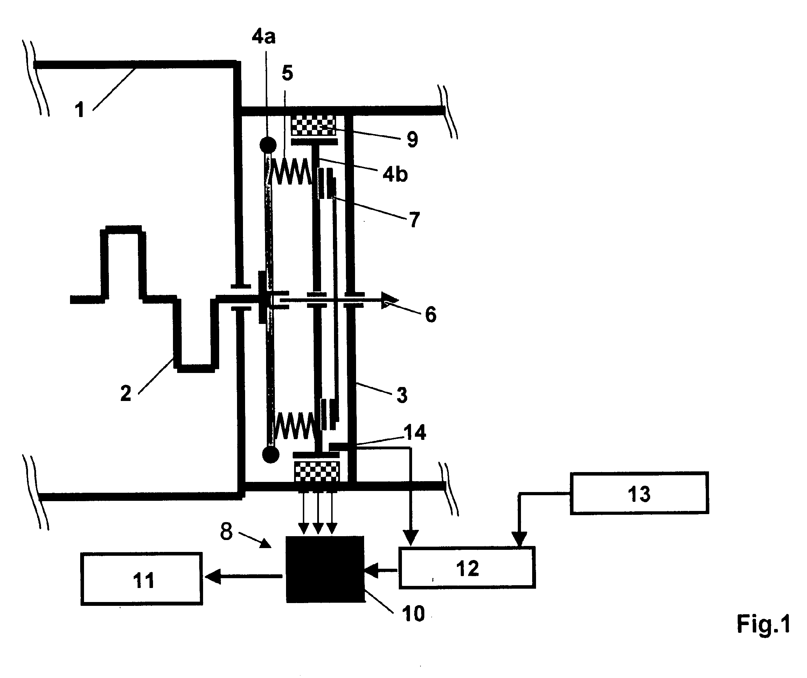

In Fig. 1 ist ein Verbrennungsmotor zum Antrieb eines Kraftfahrzeugs durch sein Gehäuse 1 und seine Kurbelwelle 2 angedeutet. An das Motorgehäuse 1 ist ein Getriebegehäuse 3 angeflanscht. Die Kurbelwelle 2 ist mit einem Schwungrad 4 verbunden. Das Schwungrad 4 ist als Zweimassenschwungrad ausgebildet und umfaßt zwei Räder 4a und 4b, die durch Torsionsfedern 5 miteinander verbunden sind. Das auf der Primärseite angeordnete Rad 4a ist mit der Kurbelwelle 2 drehfest verbunden, und das auf der Sekundärseite angeordnete Rad 4b des Zweimassenschwungrades 4 ist auf einer Getriebeeingangswelle 6 drehbar gelagert. Eine mit der Getriebeeingangswelle 6 drehfest, aber axial verschiebbar gelagerte Kupplungsscheibe 7 kann zur Übertragung eines Drehmoments an das auf der Sekundärseite angeordnete Rad 4b des Zweimassenschwungrades 4 angepreßt werden. Ein zur Stromversorgung der elektrischen Verbraucher eines Kraftfahrzeugs dienender Generator ist als Kurbelwellenstartergenerator 8 ausgebildet. Ein solcher Kurbelwellenstartergenerator dient nicht nur zur Erzeugung von elektrischer Energie, sondern zugleich auch zum Starten des Verbrennungsmotors, d. h. zum Verdrehen der Kurbelwelle 2. Der Kurbelwellenstartergenerator 8 umfaßt eine am Umfang des an der sekundärseitigen Rades 4b angeordnete Feldwicklung 9 und eine diese umgebende Statorwicklung 10. Die Statorwicklung 10 ist mit einer Batterie 11 zum Speichern elektrischer Energie verbunden. Beim Starten des Verbrennungsmotors wird die Statorwicklung 10 von der Batterie 11 bestromt, um ein elektrisches Feld zu erzeugen, so dass das sekundärseitige Rad 4b und das mit diesem über die Torsionsfedern 5 verbundene primärseitige Rad 4a und die mit diesem verbundene Kurbelwelle 2 in Drehung versetzt werden. Nachdem der Verbrennungsmotor gestartet ist, arbeitet der Kurbelwellenstartergenerator 8 als Generator und liefert Strom an die Batterie 11. Zur Steuerung der Arbeitsweise des Kurbelwellenstartergenerators 8 ist eine Steuerung 12 vorgesehen, die mit der Statorwicklung 10 verbunden ist. Die Steuerung 12 wird von einem Motorsteuergerät 13 gesteuert. Da der vorstehend geschilderte Aufbau und die Wirkungsweise eines Kurbelwellenstartergenerators zum Stand der Technik gehört, ist eine nähere Erläuterung entbehrlich

Da ein Verbrennungsmotor taktweise arbeitet, ist das erzeugte Drehmoment nicht konstant, sondern periodischen Schwankungen unterworfen. Durch die in dem Zweimassenschwungrad 4 gespeicherte Rotationsenergie können die an der Getriebeeingangswelle 6 und dem nachfolgenden Antriebsstrang auftretenden Drehmomentschwankungen zwar verringert, aber nicht vollständig verhindert werden.

Zur Bedämpfung der verbrennungsmotorisch verursachten Drehmomentschwankungen im Antriebsstrang ist eine besondere Arbeitsweise des Kurbelwellenstartergenerators 8 im Generatorbetrieb vorgesehen. Die von dem Kurbelwellenstartergenerator 8 erzeugte elektrische Leistung und damit sein auf das Zweimassenschwungrad 4 ausgeübte Gegendrehmoment wird in Abhängigkeit von der Drehzahl des Verbrennungsmotors gesteuert. Zu diesem Zweck ist ein die Drehzahl des Zweimassenschwungrades 4 ermittelnder Drehzahlsensor 14 (Drehzahl kann auch an anderen Messstellen oder durch OT-Geber des Motors ermittelt werden) mit der Steuerung 12 des Kurbelwellenstartergenerators 8 verbunden. Die Leistungsabgabe des Kurbelwellenstartergenerators 8 und damit sein auf das Zweimassenschwungrad 4 ausgeübtes Gegendrehmoment wird so gesteuert, dass es mit der Frequenz der Drehmomentschwankungen im Antriebsstrang variiert. Mit anderen Worten, der Generator wird derart gesteuert, dass die Schwankungen des von diesem verursachten Gegendrehmoments und die Schwankungen des Drehmoments im Antriebsstrang phasengleich sind. (Alternative: Der Generator wird vorzugsweise nach Frequenz und Amplitude derart gesteuert, dass sein Moment den Drehmomentschwankungen im Antriebsstrang entgegenwirkt.)

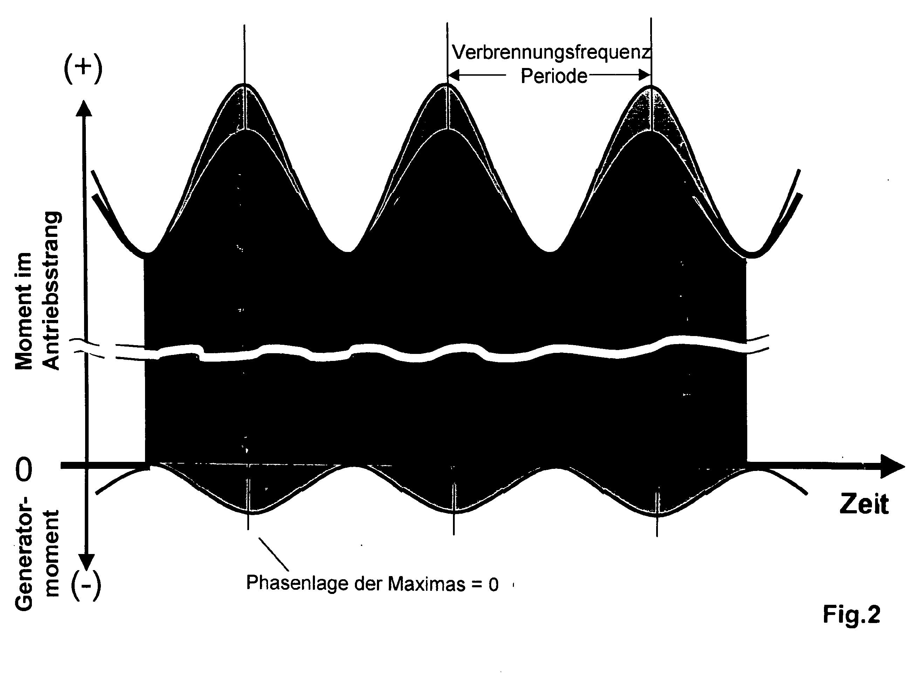

In Fig. 2 ist der zeitliche Verlauf des vom Verbrennungsmotor erzeugten Drehmoments und des vom Kurbelwellenstartergenerator 8 im Generatorbetrieb erzeugten Gegenmoments für den Ort des Generators dargestellt. Das auf den Antriebsstrang ausgeübte positive Drehmoment besteht aus einem gleichbleibenden statischen Anteil und aus einem periodisch schwankenden dynamischen Anteil. Die Periode des dynamischen Anteils des Drehmoments entspricht der Verbrennungsfrequenz des Motors. Der Kurbelwellenstartergenerator 8 wird im Generatorbetrieb so gesteuert, dass das auf des sekundärseitige Rad 4b des Zweimassenschwungrades 4 ausgeübte Gegenmoment seinen höchsten Wert erreicht, wenn das von dem Verbrennungsmotor erzeugte Drehmoment seinen höchsten Wert erreicht, und auf Null absinkt, wenn das von dem Verbrennungsmotor erzeugte Drehmoment seinen niedrigsten Wert erreicht. Da sich das von dem Verbrennungsmotor erzeugte Drehmoment und das von dem Kurbelwellenstartergenerator verursachte Gegenmoment in der Getriebeeingangswelle bzw. im Antriebsstrang überlagern, werden die Spitzen der Drehmomentschwankungen abgebaut, und der Kurvenverlauf wird abgeflacht. Wie aus Fig. 2 hervorgeht, entspricht die Reduzierung der Amplitude der Drehmomentschwankungen dem maximalen Gegenmoment des Generators. Da die Leistung des Generators periodisch auf Null verringert wird, wird der Tiefstwert der Drehmomentschwankungen nicht beeinflußt, so dass die Schwankungsbreite verringert wird. Das an der Getriebeeingangswelle bzw. im Antriebsstrang auftretende Antriebsdrehmoment ist durch die dunkle Fläche wiedergegeben.

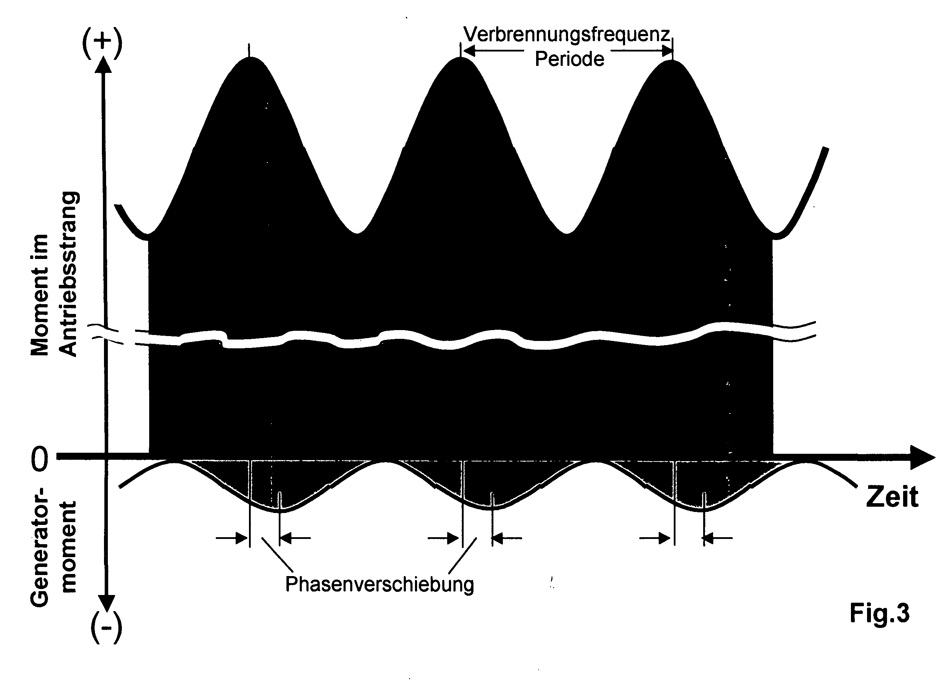

Fig.3 entspricht der Darstellung nach Fig. 2 und zeigt eine Erweiterung der Steuerungsmöglichkeiten des Generatorgegenmoments. Hier kann die Phasenlage des im Generator erzeugten Gegenmoments durch die Steuerung 12 gegenüber der Momentenschwankung im Antriebsstrang variabel gesteuert, bzw. geregelt werden. Dies kann dadurch erreicht werden, indem in der Steuerung 12 ein Kennfeld abgelegt ist, das die spezifischen Fahrzeugübertragungseigenschaften beschreibt und damit die erforderliche Phasenverschiebung gesteuert werden kann, oder durch einen in der Steuerung 12 vorhandenen Regelkreis erreicht werden, der mit Hilfe eines geeigneten weiteren Sensors im Fahrzeug die erforderliche Phasenverschiebung einstellt. Diese Erweiterung ist insbesondere dann erforderlich, wenn dadurch die akustischen Auswirkungen der Drehmomentschwankungen im Fahrzeuginnenraum weiter verbessert werden können.

Bei dem vorstehend beschriebenen Ausführungsbeispiel bildete das sekundärseitige Rad 4b des Zweimassenschwungrades 4 den Rotor des Generators. Die Erfindung kann aber auch dadurch realisiert werden, indem der Generator auf der Primärseite des Zweimassenschwungrads oder auch an einem anderen Ort innerhalb des Antriebsstrangs angeordnet ist. Sie kann aber ebenso mit einem herkömmlichen Generator verwirklicht werden, der über einen Riemen- oder Kettentrieb oder über ein Zahnradgetriebe mit dem Motor gekuppelt ist. Entscheidend ist, dass die Leistung des Generators mit der Verbrennungsfrequenz des Motors schwankt, wobei die Höchstwerte und die Tiefstwerte der Generatorleistung so eingestellt werden können, dass diese so auf die Höchst- und Tiefstwerte des von dem Verbrennungsmotor bewirkten Drehmoments einwirken, dass die geringste Auswirkung in Form von Schwingungen oder Geräuschen im Fahrzeug gewährleistet werden kann.

## Patentansprüche

1. Verfahren zur Bedämpfung von verbrennungsmotorisch verursachten Drehmomentschwankungen im Antriebsstrang eines Kraftfahrzeugs, das einen mit dem Verbrennungsmotor gekuppelten Generator aufweist, **dadurch gekennzeichnet, dass** das von dem Generator verursachte Gegendrehmoment in Abhängigkeit von der Drehzahl des Motors gesteuert wird derart, dass es mit der Frequenz der Drehmomentschwankungen im Antriebsstrang variiert, wobei die Schwankungen des Drehmoments im Antriebsstrang und des Gegendrehmoments des Generators phasengleich sind oder die Phase entsprechend besonderer Anforderungen gesteuert oder geregelt werden kann.

2. Verfahren nach Anspruch 1, **dadurch gekennzeichnet, dass** das Gegendrehmoment des Generators periodisch auf Null verringert wird.

3. Verfahren nach Anspruch 1 oder 2, **dadurch gekennzeichnet, dass** die Phasenlage des Gegendrehmoments des Generators durch ein Kennfeld in der Steuerung eingestellt werden kann.

4. Verfahren nach Anspruch 1 oder 2, **dadurch gekennzeichnet, dass** die Phasenlage des Gegendrehmoments des Generators durch einen Regelkreis in der Steuerung eingestellt werden kann.

5. Verfahren nach Anspruch 1 oder 2, **dadurch gekennzeichnet, dass** das Gegendrehmoment des Generators im Schubbetrieb des Verbrennungsmotors auf dem Nennwert gehalten wird.
